# EUROPÄISCHE PATENTSCHRIFT

(11) **EP 4 002 067 B1**
(45) Veröffentlichungstag und Bekanntmachung des Hinweises auf die Patenterteilung: **11.10.2023**
(21) Anmeldenummer: 21206400.0
(22) Anmeldetag: 04.11.2021
(51) Int. Cl.: G06F 3/01, G01S 7/481, G06T 17/00

(54) **VERFAHREN ZUR VORBEREITUNG EINES 3D-SCANS UND 3D-SCANNER ZUR DURCHFÜHRUNG DES VERFAHRENS**
METHOD FOR PREPARATION OF A 3D SCAN AND 3D SCANNER FOR PERFORMING THE METHOD
PROCÉDÉ DE PRÉPARATION D'UN BALAYAGE 3D ET BALAYEUR 3D DESTINÉ À LA MISE EN OEUVRE DU PROCÉDÉ

(30) Priorität: 12.11.2020 DE 102020129923
(43) Veröffentlichungstag der Anmeldung: 25.05.2022
(73) Patentinhaber: smart optics Sensortechnik GmbH, 44801 Bochum (DE)
(72) Erfinder: PRALL, Christoph, 44892 Bochum (DE); KLEENE, Hendrik, 44225 Dortmund (DE); FRIEMEL, Jörg, 58452 Witten (DE); GARSTKA, Jens, 44369 Dortmund (DE)
(74) Vertreter: Schneiders & Behrendt Bochum

(56) Entgegenhaltungen:
- US-A1- 2008 306 709

## Beschreibung

Die Erfindung betrifft ein Verfahren zur Vorbereitung eines 3D-Scans mindestens eines Teils einer Oberfläche eines Objekts.

Aus dem Stand der Technik sind 3D-Scanner bekannt. Diese verwenden 3D-Sensorik, deren Funktion auf Verfahren der optischen Triangulation basiert. Hierbei wird mittels eines Projektors ein zu messendes Objekt mit einer Serie von strukturierten Mustern beleuchtet. Eine Kamera nimmt hierbei die projizierten und durch die Oberfläche des zu vermessenden Objektes verzerrten Muster auf. Aus der Verzerrung der Muster im aufgenommenen Kamerabild lässt sich die dreidimensionale (3D) Beschaffenheit des zu vermessenden Objektes bestimmen. Dieses Verfahren erlaubt eine relativ präzise Erfassung der 3D-Beschaffenheit des Objektes. Allerdings ist dieses Verfahren darauf angewiesen, dass sich das Objekt zwischen der Projektion der einzelnen strukturierten Muster nicht bewegt. Eine schnelle Erfassung von bewegten und nicht feststehenden Objekten ist somit nicht möglich.

Eine Messung der 3D-Beschaffenheit eines Objektes wird durch den Benutzer über eine Auswahl innerhalb der grafischen Benutzeroberfläche einer Software ausgelöst. Die manuelle Bedienung über die Benutzeroberfläche der Software ist hierbei fehleranfällig und nicht intuitiv. Des Weiteren muss der Benutzer die Art des zu scannenden Objektes sowie den zu scannenden Bereich auswählen und das Objekt manuell im Erfassungsbereich der Sensorik des 3D-Scanners platzieren. Die manuelle Platzierung des Objekts ist naturgemäß nicht sonderlich präzise, insbesondere bei häufig wechselnder Beschaffenheit der Objekte. Je nach getroffener Auswahl des Benutzers wird von der Software kategoregiebasiert aus einer Datenbank eine sogenannte Scanstrategie ausgewählt und mit dieser das Objekt über die Sensorik des 3D-Scanners erfasst. Die Scanstrategie beschreibt hierbei unter anderem, aus welchen Richtungen ein Objekt mittels der 3D-Sensorik sukzessive erfasst wird, um eine vollständige Erfassung der 3D-Beschaffenheit des Objektes zu ermöglichen. Objekte mit komplexen Oberflächen weisen hierbei aufgrund von Abschattungen Bereiche auf, die nur aus wenigen spezifischen Richtungen erfasst werden können. Daher wird vom Benutzer in der Software bei Objekten mit komplexen 3D-Beschaffenheiten eine Scanstrategie mit mehreren Scan-Richtungen gewählt. Diese Scanstrategien sind aber, wie beschrieben, nur Objektkategorien zugeordnet, bei denen Objekte mit komplexen 3D-Beschaffenheiten aus einer größeren Anzahl verschiedener Richtungen erfasst werden als Objekte mit weniger komplexen 3D-Beschaffenheiten. Die Komplexität der zu erfassenden Oberfläche eines Objektes kann sich aber innerhalb einer Objektkategorie unterscheiden, ggf. auch ohne dass dieser Unterschied für den Benutzer ersichtlich ist. Eine individuelle, optimierte Anpassung der Scanstrategie an die Komplexität der 3D-Beschaffenheiten des zu vermessenden Objekts ist bei diesen Verfahren nicht möglich. Eine optimale Scanstrategie definiert eine minimale Anzahl von Scan-Richtungen, sodass das zu vermessende Objekt oder zumindest ein vorgegebener Bereich desselben mit der gewünschten Genauigkeit von der 3D-Sensorik vollständig erfasst wird.

Ein Verfahren zur Vorbereitung eines 3D-Scans wird beispielsweise in der Druckschrift US 2008/306709 A1 beschrieben.

Es ist vor diesem Hintergrund Aufgabe der Erfindung, ein Verfahren zur Bestimmung der Scanstrategie dahingehend zu verbessern, dass die Bedienung intuitiver und weniger fehleranfällig ist, wobei gleichzeitig eine individuell an die Komplexität der zu erfassenden Oberfläche angepasste Scanstrategie automatisch bestimmt wird.

Hierzu schlägt die Erfindung ein Verfahren zur Vorbereitung eines 3D-Scans mindestens eines Teils einer Oberfläche eines Objekts mittels eines 3D-Scanners vor, der eine Steuer- und Auswerteeinheit und zwei Kameras umfasst, die in oder an dem 3D-Scanner angeordnet sind, wobei der 3D-Scanner einen Objektraum mit einem darin beweglich angeordneten Objektträger aufweist. Das Verfahren umfasst die folgenden Schritte:
- Positionieren des Objektes auf dem Objektträger im Objektraum des 3D-Scanners,
- synchrones Erstellen jeweils einer Bildaufnahme mindestens eines Teils einer Oberfläche des Objekts mittels der beiden Kameras,
- Bestimmen der Beschaffenheit des Objektes sowie dessen Position und die Ausrichtung im Objektraum anhand der Bildaufnahmen mittels der Regel- und Auswerteeinheit und
- darauf basierendes Festlegen einer Scanstrategie für den 3D-Scan durch die Steuer- und Auswerteeinheit.

Erfindungsgemäß sieht das Verfahren vor, dass ein Bediener des 3D-Scanners manuell auf einen bestimmten Bereich im Objektraum mit einem Finger deutet oder mit einer Bewegung des Fingers einen bestimmten Bereich umgrenzt, wobei diese Geste mittels der Kameras und der Steuer- und Auswerteeinheit erfasst wird und bei der Ausrichtung des Objektträgers und/oder Festlegung der Scanstrategie berücksichtigt wird.

Die beiden Kameras nehmen nahezu den gleichen Raum auf. Hierzu können, je nach Erfassungsbereich der Kameras, die optischen Achsen der beiden Kameras auf einen gemeinsamen Punkt im oder außerhalb des Objektraums gerichtet sein. Bei einem großen Erfassungsbereich der beiden Kameras können die optischen Achsen auch parallel verlaufen. Hierdurch lässt sich, wie beim menschlichen Sehen, ein stereoskopisches Bild errechnen, welches die Bestimmung einer 3D-Höhenkarte des erfassten Bereichs ermöglicht. Da die beiden Kameras mittels der Steuer- und Auswerteeinheit synchron angesteuert und ausgelesen werden, können auch bewegte Objekte erfasst werden. Dieses 3D-Stereokamerasystem kann somit die Beschaffenheit des Objektes sowie dessen Position und die Ausrichtung im Objektraum des 3D-Scanners schnell und in Bewegung erfassen. Des Weiteren ermöglicht das erfindungsgemäße Verfahren, die Art des zu scannenden Objekts zu erkennen und hierbei mögliche Abschattungen zu identifizieren und somit eine optimale Scanstrategie zu evaluieren. Weitere Anwendungen sind denkbar, ohne dabei von der der Erfindung zugrundeliegenden Idee abzuweichen.

Der Finger des Bedieners und ggf. die Bewegung des Fingers wird ebenfalls erfasst. Hierbei kann insbesondere die Ausrichtung des Fingers und/oder eine Bewegung des Fingers bestimmt werden und somit der Bereich, auf den der Finger zeigt, erfasst werden. Diese Geste kann bei der Festlegung der Scanstrategie berücksichtigt werden. Das erfindungsgemäße Verfahren ermöglicht also erstmals eine intuitive Gestensteuerung. Neben der Markierung von Bereichen sind auch weitere Interaktionen über die Gestensteuerung möglich, wie beispielsweise die Steuerung der Positionierung des Objektträgers oder ein Startsignal für den Beginn des Scanvorgangs.

Eine Weiterbildung der Erfindung sieht vor, dass, nachdem die Beschaffenheit des Objektes sowie dessen Position und die Ausrichtung im Objektraum anhand der Bildaufnahmen bestimmt wurde, das Objekt mittels des Objektträgers im Objektraum derart ausgerichtet wird, dass dieses optimal im Erfassungsbereich einer dem 3D-Scanner zugeordneten 3D-Sensorik angeordnet ist. Der Objektträger ist hierbei über einen geeigneten Antrieb beweglich im Objektraum angeordnet. Der Antrieb wird dabei von der Regel- und Auswerteeinheit des 3D-Scanners angesteuert. Das Objekt kann auf diese Weise automatisch im Erfassungsbereich der 3D-Sensorik positioniert werden, sodass diese den jeweiligen Bereich der zu scannenden Oberfläche des Objekts bestmöglich erfasst. Die Positionierung des Objekts kann nach einem ersten Scanvorgang für wenigstens einen weiteren Scanvorgang erneut durchgeführt werden, sodass gemäß der Scanstrategie bei dem weiteren Scanvorgang ein Bereich gescannt wird, der in der vorherigen Positionierung nicht oder nur unzureichend erfasst wurde, z.B. weil er außerhalb des Blickfeldes der 3D-Sensorik oder von der Struktur des Objektes aus der in der vorherigen Positionierung eingenommenen Perspektive verdeckt wurde.

Eine Weiterbildung der Erfindung sieht vor, dass mittels eines Lichtprojektionssystems und mittels der Steuer- und Auswerteeinheit, die das Lichtprojektionssystem ansteuert, der durch die Geste bestimmte Bereich beleuchtet wird. Hierdurch wird eine sofortige Rückmeldung an den Bediener gegeben, die den auf Basis der Geste ermittelten Bereich kennzeichnet. Sofern hierbei nicht der vom Bediener gewünschte Bereich identifiziert wurde, wird dieser darauf aufmerksam und kann die Einstellung anpassen.

Eine Weiterbildung der Erfindung sieht vor, dass mittels des Lichtprojektionssystems und mittels der Steuer- und Auswerteeinheit ein Bedienfeld auf eine Fläche im Objektraum projiziert wird. Der Bediener kann über das Bedienfeld Einstellungen des 3D-Scanners vornehmen und/oder den Scanvorgang starten. Für die Bedienung nutzt er beispielsweise den Finger. Die Position und Ausrichtung des Fingers wird, wie oben beschrieben, erfasst und kann einer auf dem Bedienfeld dargestellten Funktion zugeordnet werden. Eine zusätzliche grafische Schnittstelle über einen Bildschirm oder ähnliches wird somit nicht benötigt.

Außerdem betrifft die Erfindung einen 3D-Scanner mit einer 3D-Sensorik, einer Steuer- und Auswerteeinheit und zwei Kameras, die in oder an dem 3D-Scanner angeordnet sind, wobei der 3D-Scanner einen Objektraum mit einem darin beweglich angeordneten Objektträger aufweist, wobei der 3D-Scanner dazu eingerichtet ist,
- mittels der beiden Kameras synchron jeweils mindestens eine Bildaufnahme mindestens eines Teils einer Oberfläche eines auf dem Objektträger im Objektraum des 3D-Scanners positionierten Objektes zu erstellen,
- mittels der Steuer- und Auswerteeinheit die Beschaffenheit des Objektes sowie dessen Position und Ausrichtung im Objektraum anhand der Bildaufnahmen zu bestimmen,
- mittels der Steuer- und Auswerteeinheit darauf basierend eine Scanstrategie für den 3D-Scan festzulegen und
- mittels der 3D-Sensorik mindestens einen Teil der Oberfläche des Objekts gemäß der Scanstrategie dreidimensional zu erfassen. Dabei ist der

3D-Scanner zweckmäßig zur Durchführung des zuvor beschriebenen Verfahrens eingerichtet.

Die Erfindung wird im Folgenden anhand der Zeichnungen näher erläutert. Es zeigen:
- Figur 1:: schematisch die Anwendung des erfindungsgemäßen Verfahrens in einem ersten Ausführungsbeispiel;
- Figur 2:: schematisch die Anwendung des erfindungsgemäßen Verfahrens in einem zweiten Ausführungsbeispiel;
- Figur 3:: schematisch die Anwendung des erfindungsgemäßen Verfahrens in einem dritten Ausführungsbeispiel;
- Figur 4:: schematisch die Anwendung des erfindungsgemäßen Verfahrens in einem vierten Ausführungsbeispiel;

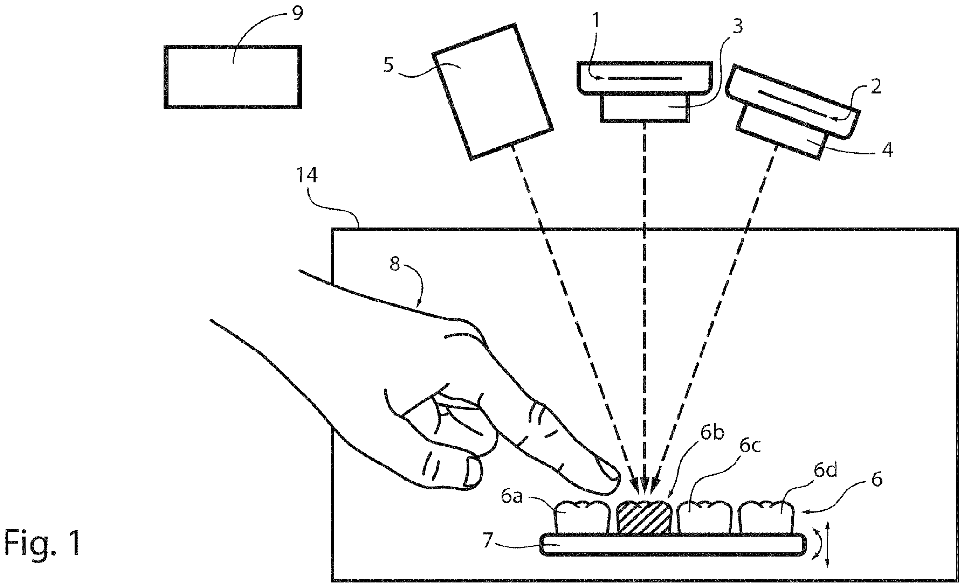

In den Figuren 1, 2, 3 und 4 sind schematisch Ausführungsbeispiele des erfindungsgemäßen Verfahrens zur schnellen 3D-Groberfassung von Objekten innerhalb eines 3D-Scanners zur Vorbereitung eines 3D-Scans dargestellt.

Figur 1 zeigt hierbei schematisch ein erstes Ausführungsbeispiel, bei dem zwei Kameras 1, 2 stereoskopisch angeordnet sind. Die Kameras 1, 2 weisen vorgesetzt abbildende Objektive 3, 4 auf. Des Weiteren ist ein Lichtprojektionssystem 5 dargestellt. Die optischen Achsen der Kameras 1, 2 sind auf einen gemeinsamen Punkt in einem Objektraum 14 des 3D-Scanners gerichtet. Weiterhin ist im Objektraum 14 ein mittels einer Steuer- und Auswerteeinheit 9 beweglicher Objektträger 7 angeordnet. Auf dem Objektträger 7 ist ein zu scannendes Objekt 6 positioniert, welches hier aus vier Zahnmodellen 6a, 6b, 6c, 6d besteht. Die Steuer- und Auswerteeinheit 9 steht kommunikativ in Verbindung mit den Kameras 1, 2, dem Lichtprojektionssystem 5 und dem Objektträger 7.

Bei dem erfindungsgemäßen Verfahren erstellen die beiden Kameras 1, 2 synchron Bildaufnahmen des Objekts 6. Anhand der Bildaufnahmen werden mittels der Steuer- und Auswerteeinheit 9 die 3D-Beschaffenheit des Objekts 6 sowie dessen Position und Ausrichtung im Objektraum bestimmt. Basierend auf dieser Auswertung kann die Scanstrategie für den darauffolgenden Scanvorgang festgelegt werden. Durch wiederholte synchrone Bildaufnahmen der beiden Kameras 1, 2 können auch Bewegungen des Objekts 6 im Objektraum 14 detektiert werden.

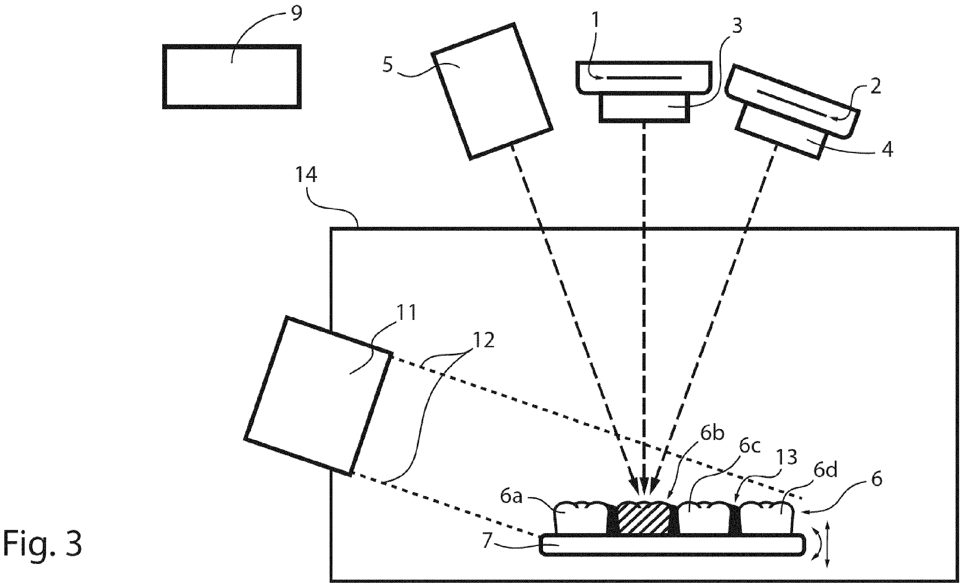

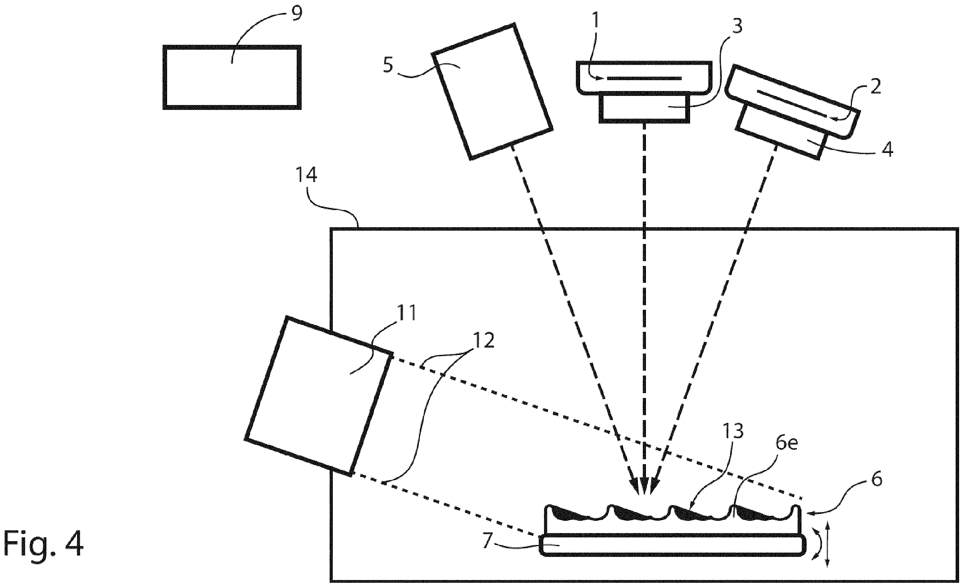

Des Weiteren zeigt Figur 1 eine Hand 8 deren Zeigefinger auf einen der vier Zähne 6b deutet, dessen Beschaffenheit für den Benutzer besonders interessant ist. Diese Geste wird ebenfalls von den Kameras 1, 2 erfasst und das Zahnmodell 6b als Bereich, in dem sich das Zahnmodell 6b befindet, markiert. Dieser Bereich kann bei der anschließenden Festlegung der Scanstrategie besondere Berücksichtigung finden. Das Lichtprojektionssystem 5 beleuchtet diesen Bereich zusätzlich, sodass der Benutzer eine direkte Rückmeldung hat, ob seine Geste wie gewünscht erfasst wurde. Der Scanvorgang selbst kann entweder ebenfalls durch die beiden Kameras 1, 2 oder eine zusätzliche 3D-Sensorik durchgeführt werden (vgl. Fig. 3 und 4).

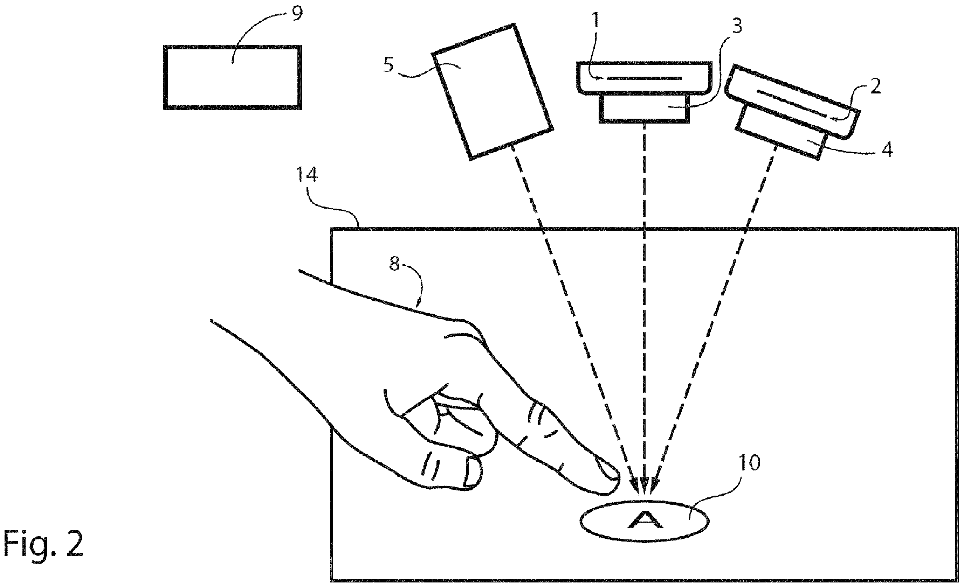

Figur 2 zeigt schematisch eine weitere Anwendungsmöglichkeit des Lichtprojektionssystems 5. Mittels des Lichtprojektionssystems 5 wird ein Bedienfeld 10 auf eine Oberfläche im Objektraum 14 abgebildet. Der Bediener kann mit dem Finger auf ein projiziertes Bedienelement des Bedienfelds 10 zeigen oder die Oberfläche im Bereich des Bedienfelds 10 berühren, ähnlich wie beim Betätigen einer Taste. Diese Geste wird durch die Kameras 1, 2 erfasst und als Steuersignal entsprechend ausgewertet, also beispielsweise "Start des Scanvorgangs" oder "Neu-Positionierung des Objekts".

Bei dem Ausführungsbeispiel in Figur 3 ist zusätzlich eine 3D-Sensorik 11 mit einem Erfassungsbereich 12 dargestellt. Nachdem mittels der beiden Kameras 1, 2 die grobe 3D-Beschaffenheit sowie die Position und Ausrichtung des Objekts 6 im Objektraum 14 festgestellt wurde, können Bereiche, die durch die 3D-Sensorik 11 nur unzureichend erfasst werden, wie z.B. Abschattungen 13, ermittelt werden. Anschließend kann das Objekt 6 über die Steuer- und Auswerteeinheit 9 mittels des Objektträgers 7 im Objektraum 14 relativ zu der 3D-Sensorik 11 ausgerichtet werden, sodass sich das Objekt 6 in gewünschter Ausrichtung im Erfassungsbereich 12 der 3D-Sensorik 11 befindet und keine Abschattungen 13 im zu scannenden Bereich auftreten.

Figur 4 zeigt ein sehr ähnliches Ausführungsbeispiel zur Figur 3. Allerdings handelt es sich bei dem Objekt 6 nicht um Zahnmodelle, sondern um einen Abdruck 6e, d.h. ein Negativmodell der vier Zähne. Wie in der Figur 4 ersichtlich, entstehen bei dem schrägen Blickwinkel der 3D-Sensorik 11 relativ große Abschattungen 13 am Objekt 6, die nicht von der 3D-Sensorik 11 erfasst werden können. Um die Bereiche der Abschattung durch die 3D-Sensorik 11 überhaupt bzw. in ausreichender Form mittels der 3D-Sensorik 11 erfassen zu können, ist in diesem Ausführungsbeispiel eine Adaptierung der Ausrichtung des Objekts 6 notwendig. Mittels der beiden Kameras 1, 2 wird also auch in diesem Ausführungsbeispiel die grobe 3D-Beschaffenheit des Objekts 6 zunächst bestimmt. Anhand der 3D-Beschaffenheit können auch die Abschattungen 13 aus verschiedenen Blickwinkeln bestimmt werden. Unter Berücksichtigung dieser Abschattungen 13 relativ zur Blickrichtung können mittels der Steuer- und Auswerteeinheit 9 optimale Ausrichtungen des Objekts 6 relativ zur 3D-Sensorik 11 ermittelt werden und das Objekt 6 kann mittels des Objektträgers 7 entsprechend positioniert werden.

### Bezugszeichenliste:

- 1: Kamera
- 2: Kamera
- 3: Objektiv
- 4: Objektiv
- 5: Lichtprojektionssystem
- 6: Objekt
- 6a-d: Zahnmodell
- 6e: Zahnabdruck
- 7: Objektträger
- 8: Hand
- 9: Steuer- und Auswerteeinheit
- 10: Bedienfeld
- 11: 3D-Sensorik
- 12: Erfassungsbereich der 3D-Sensorik 11
- 13: Abschattung
- 14: Objektraum

## Patentansprüche

1. Verfahren zur Vorbereitung eines 3D-Scans mindestens eines Teils einer Oberfläche eines Objekts (6) mittels eines 3D-Scanners, der eine Steuer- und Auswerteeinheit (9) und zwei Kameras (1, 2) umfasst, die in oder an dem 3D-Scanner angeordnet sind, wobei der 3D-Scanner einen Objektraum (14) mit einem darin beweglich angeordneten Objektträger (7) aufweist, bei dem
- das Objekt (6) auf dem Objektträger im Objektraum (14) des 3D-Scanners positioniert wird,
- die beiden Kameras (1, 2) synchron jeweils eine Bildaufnahme mindestens eines Teils einer Oberfläche des Objekts (6) erstellen,
- mittels der Regel- und Auswerteeinheit (9) die Beschaffenheit des Objektes (6) sowie dessen Position und Ausrichtung im Objektraum (14) anhand der Bildaufnahmen bestimmt werden,
- und durch die Steuer- und Auswerteeinheit (9) darauf basierend eine Scanstrategie für den 3D-Scan festgelegt wird, **dadurch gekennzeichnet, dass**
- ein Bediener des 3D-Scanners manuell auf einen bestimmten Bereich im Objektraum (14) mit einem Finger deutet oder mit einer Bewegung des Fingers einen bestimmten Bereich umgrenzt, wobei diese Geste mittels der Kameras (1, 2) und der Steuer- und Auswerteeinheit (9) erfasst wird und bei der Ausrichtung des Objektträgers (7) und/oder Festlegung der Scanstrategie berücksichtigt wird.

2. Verfahren nach Anspruch 1, **dadurch gekennzeichnet, dass** zusätzlich die Bewegung des Objektes (6) detektiert wird.

3. Verfahren nach Anspruch 1 oder 2, **dadurch gekennzeichnet, dass**, nachdem die Beschaffenheit des Objektes (6) sowie dessen Positionen und die Ausrichtung im Objektraum (14) anhand der Bildaufnahmen bestimmt wurde, das Objekt (6) mittels des Objektträgers (7) im Objektraum derart ausgerichtet wird, dass dieses im Erfassungsbereich (12) einer dem 3D-Scanner zugeordneten 3D-Sensorik (11) angeordnet ist.

4. Verfahren nach Anspruch einem der vorgenannten Ansprüche, **dadurch gekennzeichnet, dass** mittels eines Lichtprojektionssystems (5) und der Steuer- und Auswerteeinheit (9) der durch die Geste bestimmte Bereich beleuchtet wird.

5. Verfahren nach Anspruch 4, **dadurch gekennzeichnet, dass** mittels des Lichtprojektionssystems (5) und der Steuer- und Auswerteeinheit (9) ein Bedienfeld (10) auf eine Fläche im Objektraum (14) projiziert wird.

6. 3D-Scanner mit einer 3D-Sensorik (11), einer Steuer- und Auswerteeinheit (9) und zwei Kameras (1, 2), die in oder an dem 3D-Scanner angeordnet sind, wobei der 3D-Scanner einen Objektraum (14) mit einem darin beweglich angeordneten Objektträger (7) aufweist, wobei der 3D-Scanner dazu eingerichtet ist,
- mittels der beiden Kameras (1, 2) synchron jeweils mindestens eine Bildaufnahme mindestens eines Teils einer Oberfläche eines auf dem Objektträger (7) im Objektraum (14) des 3D-Scanners positionierten Objektes (6) zu erstellen,
- mittels der Steuer- und Auswerteeinheit (9) die Beschaffenheit des Objektes (6) sowie dessen Position und Ausrichtung im Objektraum (14) anhand der Bildaufnahmen zu bestimmen,
- mittels der Steuer- und Auswerteeinheit (9) darauf basierend eine Scanstrategie für den 3D-Scan festzulegen und
- mittels der 3D-Sensorik (11) mindestens einen Teil der Oberfläche des Objekts (6) gemäß der Scanstrategie dreidimensional zu erfassen,
- die Bewegung eines Fingers eines Bediener des 3D-Scanners auf einen bestimmten Bereich im Objektraum (14) zu detektieren, wobei diese detektierte Geste mittels der Kameras (1, 2) und der Steuer- und Auswerteeinheit (9) erfassbar ist und bei der Ausrichtung des Objektträgers (7) und/oder Festlegung der Scanstrategie berücksichtig wird.

7. 3D-Scanner nach Anspruch 6, **dadurch gekennzeichnet, dass** dieser zur Durchführung des Verfahrens nach einem der Ansprüche 2 bis 5 eingerichtet ist.

## Claims

1. Method for preparing a 3D scan of at least part of a surface of an object (6) by means of a 3D scanner which comprises a control and evaluation unit (9) and two cameras (1, 2) which are arranged in or on the 3D scanner, wherein the 3D scanner comprises an object space (14) with an object carrier (7) arranged movably therein, wherein
- the object (6) is positioned on the object carrier in the object space (14) of the 3D scanner,
- the two cameras (1, 2) each synchronously produce a recorded image of at least part of a surface of the object (6),
- by means of the regulation and evaluation unit (9), the state of the object (6) and its position and orientation in the object space (14) are determined on the basis of the recorded images
- and based thereon, a scanning strategy for the 3D scan is set by the control and evaluation unit (9), **characterized in that**
- an operator of the 3D scanner manually points to a specific area in the object space (14) with a finger or delimits a specific area with a movement of the finger, wherein this gesture is detected by means of the cameras (1, 2) and the control and evaluation unit (9) and is taken into account when orienting the object carrier (7) and/or setting the scanning strategy.

2. Method according to Claim 1, **characterized in that** the movement of the object (6) is additionally detected.

3. Method according to Claim 1 or 2, **characterized in that**, after the state of the object (6) and its positions and orientation in the object space (14) have been determined on the basis of the recorded images, the object (6) is oriented in the object space by means of the object carrier (7) in such a way that said object is arranged in the capture area (12) of a 3D sensor system (11) assigned to the 3D scanner.

4. Method according to any one of the preceding claims, **characterized in that** by means of a light projection system (5) and the control and evaluation unit (9), the area determined by the gesture is illuminated.

5. Method according to claim 4, **characterized in that** a control panel (10) is projected onto a surface in the object space (14) by means of the light projection system (5) and the control and evaluation unit (9).

6. 3D scanner comprising a 3D sensor system (11), a control and evaluation unit (9), and two cameras (1, 2) which are arranged in or on the 3D scanner, wherein the 3D scanner comprises an object space (14) with an object carrier (7) arranged movably therein, wherein the 3D scanner is configured
- to synchronously produce in each case at least one recorded image of at least part of a surface of an object (6) positioned on the object carrier (7) in the object space (14) of the 3D scanner by means of the two cameras (1, 2),
- to determine the state of the object (6) and its position and orientation in the object space (14) on the basis of the recorded images by means of the control and evaluation unit (9),
- based thereon, to set a scanning strategy for the 3D scan by means of the control and evaluation unit (9), and
- to capture at least part of the surface of the object (6) three-dimensionally by means of the 3D sensor system (11) in accordance with the scanning strategy,
- to detect the movement of a finger of an operator of the 3D scanner to a specific area in the object space (14), wherein this detected gesture can be captured by means of the cameras (1, 2) and the control and evaluation unit (9) and is taken into account when orienting the object carrier (7) and/or setting the scanning strategy.

7. 3D scanner according to claim 6, **characterized in that** it is configured to perform the method according to any one of claims 2 to 5.

## Revendications

1. Procédé de préparation d'un balayage 3D d'au moins une partie d'une surface d'un objet (6) au moyen d'un scanner 3D, qui comprend une unité de commande et d'évaluation (9) et deux caméras (1, 2), qui sont disposées dans ou sur le scanner 3D, le scanner 3D présentant un espace objet (14) avec un support d'objet (7) disposé mobile dans celui-ci, dans lequel
- l'objet (6) est positionné sur le support d'objet dans l'espace objet (14) du scanner 3D,
- les deux caméras (1, 2) créent de manière synchrone respectivement une prise de vue d'au moins une partie d'une surface de l'objet (6),
- la nature de l'objet (6) ainsi que sa position et son orientation dans l'espace objet (14) sont déterminées à partir des prises de vue au moyen de l'unité de régulation et d'évaluation (9),
- et une stratégie de balayage pour le balayage 3D est définie par l'unité de commande et d'évaluation (9) sur la base de celles-ci, **caractérisé en ce que**
- un utilisateur du scanner 3D indique manuellement avec un doigt une zone déterminée dans l'espace objet (14) ou délimite une zone déterminée avec un mouvement du doigt, ce geste étant enregistré au moyen des caméras (1, 2) et de l'unité de commande et d'évaluation (9) et étant pris en compte pour l'orientation du support d'objet (7) et/ou la définition de la stratégie de balayage.

2. Procédé selon la revendication 1, **caractérisé en ce que** le mouvement de l'objet (6) est détecté en plus.

3. Procédé selon la revendication 1 ou 2, **caractérisé en ce que**, après que la nature de l'objet (6) ainsi que ses positions et l'orientation dans l'espace objet (14) ont été déterminées à partir des prises de vue, l'objet (6) est orienté dans l'espace objet au moyen du support d'objet (7) de telle manière qu'il est disposé dans la zone de détection (12) d'un ensemble de capteurs 3D (11) associé au scanner 3D.

4. Procédé selon l'une des revendications précédentes, **caractérisé en ce que** la zone déterminée par le geste est éclairée au moyen d'un système de projection lumineuse (5) et de l'unité de commande et d'évaluation (9).

5. Procédé selon la revendication 4, **caractérisé en ce qu'**un tableau de commande (10) est projeté sur une surface dans l'espace objet (14) au moyen du système de projection lumineuse (5) et de l'unité de commande et d'évaluation (9).

6. Scanner 3D doté d'un ensemble de capteurs 3D (11), d'une unité de commande et d'évaluation (9) et de deux caméras (1, 2), qui sont disposées dans ou sur le scanner 3D, le scanner 3D présentant un espace objet (14) avec un support d'objet (7) disposé mobile dans celui-ci, le scanner 3D étant conçu pour,
- au moyen des deux caméras (1, 2), créer de manière synchrone respectivement au moins une prise de vue d'au moins une partie d'une surface d'un objet (6) positionné sur le support d'objet (7) dans l'espace objet (14) du scanner 3D,
- au moyen de l'unité de commande et d'évaluation (9), déterminer la nature de l'objet (6) ainsi que sa position et son orientation dans l'espace objet (14) à partir des prises de vue,
- au moyen de l'unité de commande et d'évaluation (9), définir une stratégie de balayage pour le balayage 3D sur la base de celles-ci et
- au moyen de l'ensemble de capteurs 3D (11), enregistrer de manière tridimensionnelle au moins une partie de la surface de l'objet (6) selon la stratégie de balayage,
- détecter le mouvement d'un doigt d'un utilisateur du scanner 3D sur une zone déterminée dans l'espace objet (14), ce geste détecté pouvant être enregistré au moyen des caméras (1, 2) et de l'unité de commande et d'évaluation (9) et étant pris en compte pour l'orientation du support d'objet (7) et/ou la définition de la stratégie de balayage.

7. Scanner 3D selon la revendication 6, **caractérisé en ce que** celui-ci est conçu pour exécuter le procédé selon l'une des revendications 2 à 5.
